# EUROPEAN PATENT APPLICATION

(11) **EP 3 396 589 A1**
(43) Date of publication of application: **31.10.2018**
(21) Application number: 17382223.0
(22) Date of filing: 26.04.2017
(51) Int. Cl.: G06K 9/00, G06K 9/62, G06K 9/46

(54) **METHOD AND STATION FOR THE AUTOMATIC QUALITY CONTROL OF BIOMETRIC DATA**

(71) Applicant: GEYCE, S.A., 08173 Sant Cugat del Valles (ES)
(72) Inventor: OLIU SIMON, Marc, 08013 BARCELONA (ES); ESCALERA GUERRERO, Sergio, 08210 BARBERA DEL VALLES (ES); PARDO GARCIA, Pablo, 08038 BARCELONA (ES); VILASECA ARROYO, Joan Maria, 08640 OLESA DE MONTSERRAT (ES); VALLS PLA, Joan, 08191 RUBI (ES)
(74) Representative: Sugrañes Patentes y Marcas

(57) **Abstract**

A computer-implemented method for the automatic quality control of multimodal biometric data that comprises extracting (A) biometric characteristics (n) from multimodal biometric data; analysing (B) the biometric characteristics by means of a set of previously trained machine learning algorithms (N) to predict one or more binary conditions (m) and reject or accept (C) the multimodal biometric data according to the results of said set of machine learning algorithms, and if the multimodal biometric data is rejected, notifying (D) the binary condition or conditions that caused the rejection. Also presented is a computer program and a station for the automatic quality control of the multimodal biometric data that implement the computer-implemented method.

## Description

### Technical field of the invention

The technical field of this invention is the quality control of multimodal biometric data, which makes it possible to determine if multimodal biometric data provided can be used correctly in subsequent operations. This quality control can be used particularly in stations for the issuance of identity documents, which implement this quality control method for multimodal biometric data.

### Background Art

Multimodal enrolment stations for the issuance of documents are known. However, this type of enrolment station requires an operator to verify the quality of the multimodal biometric data provided.

It is, therefore, an object of this invention to provide a computer-implemented method that can be implemented at an enrolment station and allows the quality control of multimodal biometric data to be reliably performed in order to verify its acceptance or rejection.

### Summary of the invention

The computer-implemented method for the automatic quality control of multimodal biometric data of this invention is characterised in that it comprises extracting biometric characteristics from multimodal biometric data: analysing the biometric characteristics by means of a set of previously trained machine learning algorithms to predict one or more binary conditions and rejecting or accepting the multimodal biometric data according to the results of said set of machine learning algorithms, and if the multimodal biometric data is rejected, notifying the binary conditions that caused the rejection, i.e., that did not produce a satisfactory result.

According to one characteristic of the invention, the set of machine learning algorithms comprises artificial neural network algorithms, such as an artificial convolutional neural network algorithm which allows the image analysis by exploiting the spatial relationship between the pixels. That is to say, combining, in the artificial neural network algorithm, convolutional layers (usually the first layers) with fully connected layers (usually the last layers) to thus allow the artificial neural network algorithm to extract visual characteristics and combine them to obtain the desired prediction. This can be achieved by applying each neuron of a convolutional layer to all the positions of an image which may correspond to the multimodal biometric data or be obtained from the multimodal biometric data, for example by means of a transformation of said multimodal biometric data, such as the correction of a facial image obtained that allows a front view of the face to be achieved, resulting in a neuron response map (or channel) of the same size as the image. This is equivalent to applying a set of convolutional filters over the image or the response maps of the previous layer. The resulting response maps indicate the positions of the image that contain the characteristics encoded by the neurons. Optionally, other spatial operators can be included such as pooling and regularisation layers to reduce the size of the image, being able to analyse the characteristics on a larger scale at a later stage, or to avoid overtraining the network. Of course, it is also envisaged that other machine learning algorithms may be used, such as logistic regression or other known machine learning algorithms, or combinations thereof, for example, by implementing different types of machine learning algorithms, and incorporating convolutional layers as appropriate.

According to a further characteristic of the invention, the step of extracting biometric characteristics from multimodal biometric data is performed by computer vision algorithms, making it possible to extract said biometric characteristics from the information contained in data which could correspond to an image.

According to a further characteristic of the invention, the step of analysing the biometric characteristics includes performing combinations of the binary conditions to be predicted from a first set of pre-trained machine learning algorithms, for example from batteries of biometric characteristics whose corresponding binary conditions are already known, to predict a combination of the multiple binary conditions to be predicted.

It is also disclosed that the set of machine learning algorithms comprises a first stage of previously trained machine learning algorithms, the input of which consists of the biometric characteristics previously extracted from the multimodal biometric data and whose output are combinations of the binary conditions; and a second stage of previously trained machine learning algorithms the input of which consists of the result of the combinations of the binary conditions of the first stage and whose output are the predictions of the binary conditions. Preferably the first stage has 2^{m} machine learning algorithms, the output of which all consists of combinations of the binary conditions, in this way making it possible to evaluate all the combinations between the binary conditions. Thus, during the step of analysing the biometric characteristics, for a set of n biometric characteristics previously extracted from the multimodal biometric data and a set of m binary conditions, there will be 2^{m} modules of machine learning algorithms, such as neural networks, whose input will be the n biometric characteristics previously extracted from the multimodal biometric data and whose output will be a single binary value depending on whether or not the prediction indicates that each of the combinations of the binary conditions has been met, whereby the result of each one of the 2^{m} modules of machine learning algorithms will form the input of a new module of machine learning algorithms, such as a neural network, whose output will be the previously indicated binary conditions and which were to be predicted.

According to another characteristic of the invention, the multimodal biometric data is a facial photograph of a person and the extraction of biometric characteristics comprises the removal of the position of the centre of the eyes and facial geometry parameters of the face. Preferably, the facial geometry parameters are obtained by means of regression cascades.

According to another characteristic of the invention, the set of binary conditions comprises a group of geometric binary conditions formed by:
- front face
- eyes open
- mouth closed
- looking at camera

In addition, the step of analysing the biometric characteristics is expected to contemplate analysing the position of the centre of the eyes and the facial geometry parameters.

According to another characteristic of the invention, the set of binary conditions comprises a group of binary appearance conditions formed by:
- hair along the eyes
- shadows along the face
- face obstructed
- poorly lit face

In addition, a step of analysing the biometric characteristics is envisaged, correcting the facial geometry parameters to obtain a front view of the face evaluating, for each binary appearance condition, its combinations with the other binary appearance conditions of said group by means of a second level of machine learning algorithm, and re-evaluating the result of the second level of machine learning algorithm in a third level of machine learning algorithm to determine the binary value of each binary appearance condition.

According to another characteristic of the invention, the multimodal biometric data are one or more fingerprints of a person and the extraction of biometric characteristics comprises extracting biometric characteristics from each of the fingerprints.

According to another characteristic of the invention, the biometric characteristics of each of the fingerprints comprise:
- Finger number
- Fingerprint size
- Total number of minutiae
- Number of minutiae with quality > = 0.1
- Number of minutiae with quality > = 0.2
- Number of minutiae with quality > = 0.3
- Number of minutiae with quality > = 0.4
- Number of minutiae with quality > = 0.5
- Number of minutiae with quality > = 0.6
- Number of minutiae with quality > = 0.7
- Number of minutiae with quality > = 0.7
- Number of minutiae with quality > = 0.8
- Number of minutiae with quality > = 0.9
- NFIQ
- Mean intensities histogram
- Gradients histogram
- Entropies histogram
- Differential of intensities
- Hough transform lines magnitude histogram

According to another characteristic of the invention, the set of binary conditions comprises the following binary conditions:
- Fingerprint too dark
- Fingerprint too light
- Blurred fingerprint
- Speckled fingerprint
- Poorly positioned fingerprint
- Damaged fingerprint

According to the invention, an adapted computer program is furthermore provided for performing the above-described method. This computer program, which may also be considered as a computer program product, has computer program instructions to enable a computer device such as a station, preferably a multibiometric enrolment station, to perform the method of the invention. The computer program can be stored on a support media. This support media may be any one of RAM, ROM, floppy disk, CD, CD-ROM, DVD, removable memory, integrated circuit, FPGA, or other computer-readable media.

Furthermore, a station is disclosed, such as a multibiometric enrolment station, which in essence is characterised in that it is provided with means for performing the above-described multimodal biometric data quality control method. Said means may be a computer or a set of suitably programmed processors and memories that enable the station to implement and perform the above-described multimodal biometric data quality control method, for example by executing the computer program product or computer program described above. Thus, the means for performing the multimodal biometric data quality control method of the station, such as a multibiometric enrolment station, will be means for extracting biometric characteristics from multimodal biometric data; means for analysing the biometric characteristics through a set of previously trained machine learning algorithms to predict one or more binary conditions; and means for rejecting or accepting the multimodal biometric data according to the results of said set of machine learning algorithms, and means for notifying the binary condition(s) that caused the rejection if the multimodal biometric data has been rejected.

According to the invention, the station is provided with means for capturing a person's multimodal biometric data, such as fingerprint sensors that capture the fingerprints of a user and/or cameras to obtain a facial photograph of a user.

It is also disclosed that the station further comprises means for verifying the identity of the person or user from the multimodal biometric data obtained, such as means for comparing the biometric characteristics extracted from each of the multimodal biometric data items with biometric characteristics previously stored in a database that are associated with an identity, thus allowing the system to verify if a candidate identity previously provided by the person or user corresponds with the associated identity in the database by comparing the biometric characteristics extracted from each one of the multimodal biometric data items.

### Brief description of the drawings

Fig. 1 shows a scheme of the computer-implemented method of the present invention;
Fig. 2 shows a table with biometric characteristics that are evaluated by sets of binary conditions to evaluate different biometric multimodal data;
Fig. 2a presents the location of facial points corresponding to specific facial characteristics and which outline the major regions of interest of the face, as well as those corresponding to the centre of the eyes;
Fig. 3 represents a first scheme for the quality control of fingerprint data
Fig. 4 represents a first set of algorithms for analysing biometric characteristics by means of a set of binary conditions;
Fig. 5 represents a second scheme for the quality control of fingerprint data;
Fig. 6 represents a first scheme for the quality control of facial photograph data;
Fig. 7 represents a second set of algorithms for analysing biometric characteristics by means of a set of binary conditions;
Fig. 8 shows the set of algorithms of Fig. 7 for analysing biometric characteristics by a set of four binary conditions;
Fig. 9 presents the combinations of binary conditions evaluated in the first stage of the set of algorithms of Fig. 8;
Fig. 10 represents a second scheme for the quality control of facial photograph data
Fig. 11 represents a third scheme for the quality control of facial photograph data;
Fig. 12 represents a scheme for the quality control of facial photograph and fingerprint biometric data in a multibiometric enrolment station.

### Detailed description of the drawings

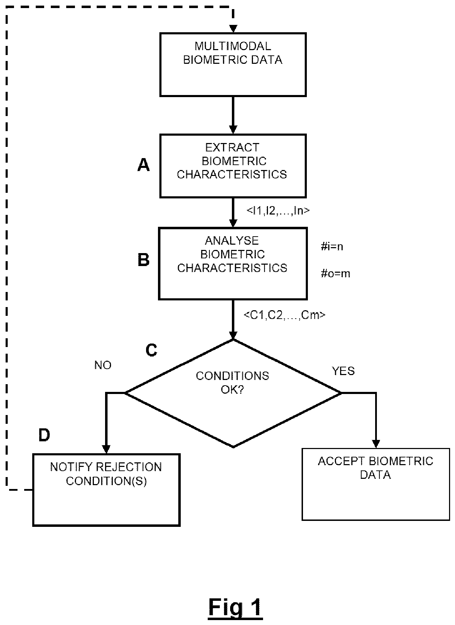

Fig. 1 shows a scheme of the computer-implemented method for the automatic and unattended quality control of multimodal biometric data of the present invention. In said scheme it can be seen that the method comprises the steps of extracting A biometric characteristics n from multimodal biometric data, which may be facial photographs, fingerprints, iris photographs, hands, pressure sensor data readings, points representing the shape of the body or any part of the body or any other data sets previously obtained either from a database or directly from a user through a camera or any other necessary sensor. Naturally, such multimodal data, although it is envisaged that it will usually be biometric, could also be of another nature, for example multimodal data of mechanical or vehicle parts, for example.

As can be seen in the scheme of Fig. 1, the method further comprises the steps of analysing B the biometric characteristics previously extracted from the multimodal biometric data by means of a set of machine learning algorithms N, which is envisaged to have one or several machine learning algorithms N, based on a set of predefined binary conditions m, having established for each predefined binary condition m a positive result, when the multimodal biometric data will be accepted based on said predefined binary condition m, and a negative result, when the multimodal biometric data will be rejected based on that predefined binary condition. The binary conditions m may represent the subjective state of the multimodal biometric data, and it is envisaged that the set of machine learning algorithms N will be trained from batteries of biometric characteristics n with their associated binary conditions m to achieve supervised learning, also known as "supervised machine learning". Naturally, it is envisaged that there are multiple predefined binary conditions m, so that different aspects of the multimodal biometric data can be evaluated, making it necessary for the result of all the predefined binary conditions m to be as expected, positive or negative, for the multimodal biometric data to be accepted, and if the result of any predefined binary condition m is not as expected, i.e. its value is not that envisaged in an acceptance situation, the multimodal biometric data will be rejected, notifying D the predefined binary condition that has not been fulfilled, so that, if possible, the steps can be carried out again with a new version of the multimodal biometric data, where the cause leading to the predefined binary condition being deemed not as expected will presumably be corrected.

Thus, the multimodal biometric data, such as a photograph, will be rejected or accepted C according to the results of said set of machine learning algorithms N and if the multimodal biometric data is rejected, the binary condition or conditions m that have caused the rejection D will be notified so that they can be remedied in a new version of the multimodal biometric data. For example, by taking a new facial photograph or the acquisition of new fingerprint data. Naturally, for fingerprints it is provided that the method can be performed individually for each of the fingerprints of each hand, or as necessary, allowing the user to repeat the method independently for each fingerprint if there has been a rejection of that fingerprint

Advantageously, as will be seen below, the set of machine learning algorithms N for analysing B the biometric characteristics comprises algorithms of artificial neural networks, and it is preferably provided that at least part of the algorithms of the artificial neural networks comprise at least one convolutional layer. Advantageously, when a machine learning algorithm of the set of algorithms N is an algorithm of artificial neural networks with at least one convolutional layer, the image analysis can be achieved by exploiting the spatial relationship between the pixels. That is to say, by combining convolutional layers (usually the first layers) with fully connected layers (usually last layers) to extract visual characteristics and merging them to obtain the desired prediction; applying each neuron of a convolutional layer to all positions of the image, resulting in a neuron response map (or channel) of the same size as the image. This is equivalent to applying a set of convolutional filters over the image or the response maps of the previous layer. The resulting response maps indicate the positions of the image that contain the characteristics encoded by the neurons. Optionally, it is envisaged that other spatial operators will be included in said algorithm of artificial neuronal networks such as pooling and regularisation layers to reduce the size of the image, being able to analyse the characteristics on a larger scale at a later stage, or to avoid overtraining the network.

Some non-limiting examples of performing the method for extracting and analysing both fingerprints and facial photographs, using one or more artificial neural network algorithms, will be described below. Naturally, the methods shown by way of example could be used interchangeably for the automatic quality control of different multimodal biometric data.

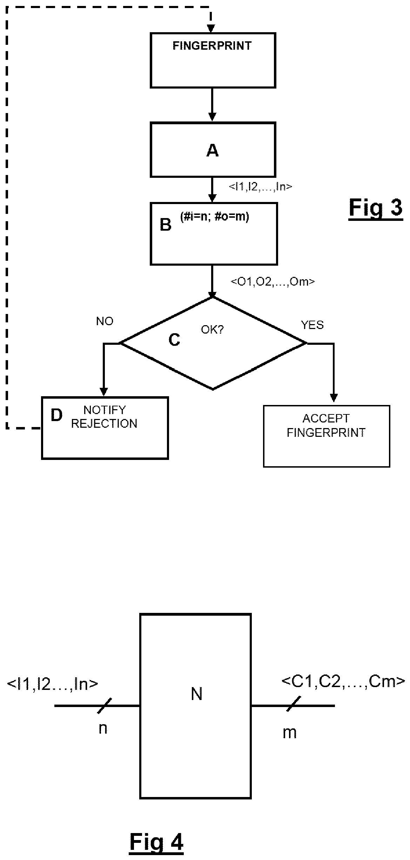

Fig. 3 shows a first module for analysing biometric characteristics formed by a neural network. As can be seen, the computer-implemented method for the quality control of multimodal biometric data when the multimodal biometric data consists of fingerprints also comprises extracting A biometric characteristics n from the multimodal biometric data, which will be data of a fingerprint. This extraction of biometric characteristics n will allow an input to be composed with a length of n for a set of machine learning algorithms N for analysing B the biometric characteristics based on at least one set of binary conditions m, to later reject or accept C the multimodal biometric data according to the result of said set of machine learning algorithms N, which in this embodiment is formed by a machine learning algorithm, and if the multimodal biometric data is rejected, notifying D the binary conditions of the at least one set of binary conditions m which have caused the rejection.

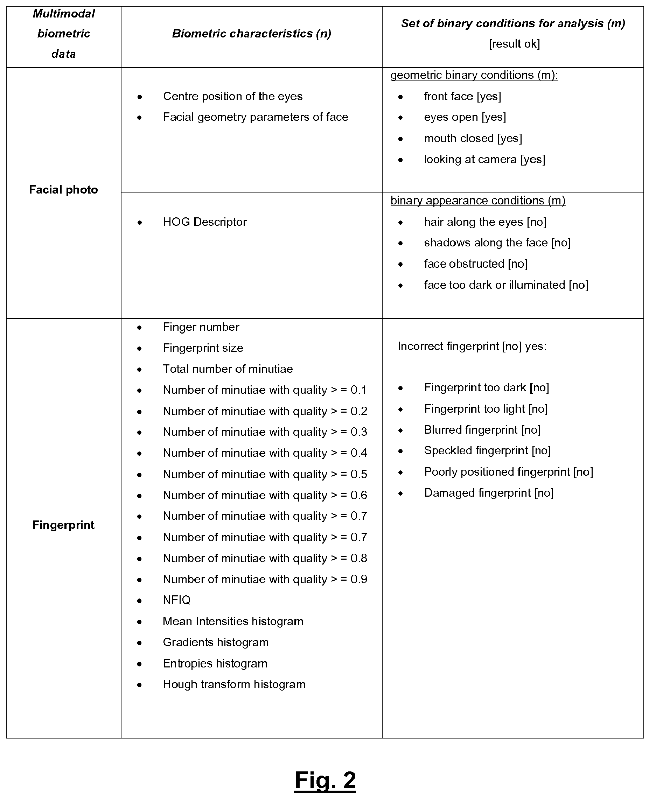

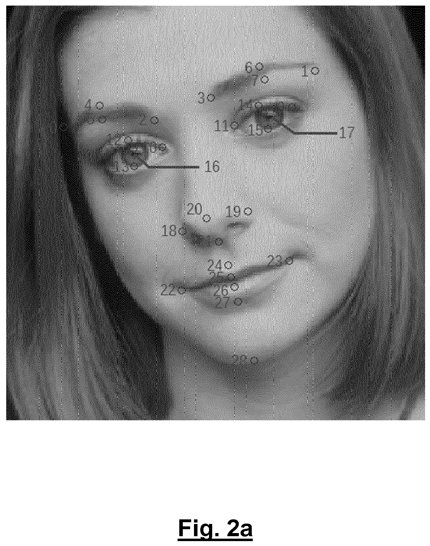

In this case, in the step of analysing B the biometric characteristics m, the binary conditions m of detail also indicated in the table of Fig. 2 will be analysed based on the biometric characteristics n indicated in the table of Fig. 2, i.e., the binary conditions m will be assessed based on the n biometric characteristics.

The n biometric characteristics, which can be interpreted as a vector of dimension n, will be previously extracted in the step of extracting A biometric characteristics and will be, in this embodiment variant, the following:
- Finger: identifier of each of the ten fingers
- Fingerprint size: Size of the fingerprint in proportion to a fixed segmentation size.
- Total number of minutiae: Total number of key fingerprint points found in the fingerprint.
- Number of minutiae with quality > = 0.1
- Number of minutiae with quality > = 0.2
- Number of minutiae with quality > = 0.3
- Number of minutiae with quality > = 0.4
- Number of minutiae with quality > = 0.5
- Number of minutiae with quality > = 0.6
- Number of minutiae with quality > = 0.7
- Number of minutiae with quality > = 0.8
- Number of minutiae with quality > = 0.9
- NFIQ: Quality value according to the NIST Fingerprint Image Quality system
- Mean Intensities histogram: The mean intensities around each pixel are extracted by creating an image of densities and the histogram of that image is calculated. This histogram is extracted from both the whole image and the disjointed segments.
- Gradients histogram: The magnitudes of the main gradients around each pixel of the fingerprint are extracted and the histogram of these magnitudes is calculated. This histogram is extracted from both the whole image and the disjointed segments.
- Entropies histogram: The entropy around each pixel is extracted and the corresponding entropy histogram is calculated. This histogram is extracted from both the whole image and the disjointed segments.
- Differential of intensities: The differential of intensities between different regions of the fingerprint is calculated.
- Hough transform lines magnitude histogram: The straight-line map of the Probabilistic Hough Transform is extracted and a histogram of magnitudes is made.

By calculating 32-bin histograms, we obtain a total vector of biometric characteristics of 923 dimensions, meaning that in this embodiment n=923.

This input of length n=923 will be used to analyse the biometric characteristics B by means of a set of machine learning algorithms N formed, in this case, by a sole machine learning algorithm based on the set of the m=6 previously indicated binary conditions in the table in Fig.2, such that based on the input, the set of binary conditions can be analysed according to the previously trained machine learning algorithm, where this set of m=6 binary conditions will preferably be the following most common causes of poor quality fingerprint, although others may be employed:
- Dark: The fingerprint contains relatively large very dark areas where the valleys of the fingerprint cannot be distinguished.
- Light: The fingerprint contains areas that are too light where the valleys of the fingerprint can hardly be distinguished.
- Blurred: The fingerprint is totally or partially blurred, whereby the grooves of the fingerprint are not well defined.
- Speckled: The fingerprint contains small regions where the grooves converge creating dark spots.
- Badly positioned: The fingerprint was badly placed when scanned meaning that there is not enough area around the centre of the fingerprint and/or the centre is displaced.
- Damaged: The physical fingerprint is damaged meaning that the analysis cannot achieve the necessary quality.

Thus, those error conditions whose probability exceeds a threshold will be identified as present in the fingerprint, meaning that the fingerprint must be rejected based on the result of the machine learning algorithm. Otherwise the fingerprint is accepted and the process will continue with the capture of another fingerprint if necessary.

If the fingerprint is rejected, the binary condition or conditions from the set six binary conditions m described above that have caused the rejection D will be notified such that, if possible, the fingerprint can be captured again to repeat the method, for example by a number of attempts.

Fig. 4 shows an embodiment of the module that analyses the biometric characteristics B by means of at least one machine learning algorithm, such as a previously trained neural network, this module has an input length n, corresponding to the dimensions of the input vector and an output length m corresponding to the different sets of binary conditions.

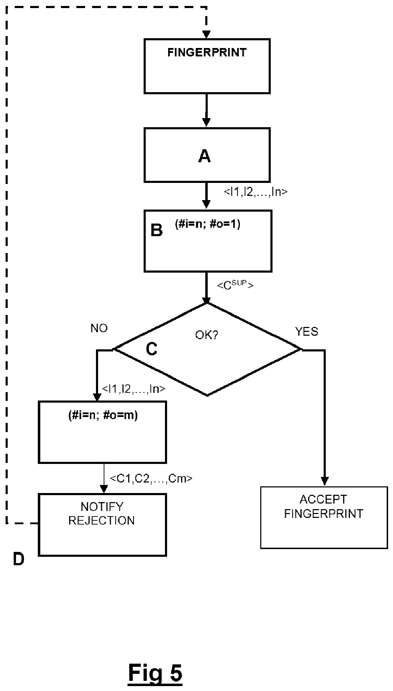

Fig. 5 shows this module that analyses the biometric characteristics B for the input length n=923 and output length m=6 presented above.

Naturally, although an output dimension is identified with each binary condition, this output could be encoded if necessary to increase or decrease the length of said output vector. For example, the output could be a vector of a single dimension with an identifier that indicated the erroneous combinations or conditions that have not been met, for example, based on its binary representation. The same could happen with the input, which could be conveniently encoded if considered appropriate.

It is envisaged that the Random Forest machine learning algorithm will be used. Advantageously, this algorithm allows the neural network to calculate the probability that each fingerprint belongs to each one of the six binary conditions.

Since the method of Fig. 3 described above can introduce a significant delay given the complexity of the computation, which could be a nuisance to users who, for example, are analysing all their fingerprints, it is envisaged that instead of analysing all the binary conditions separately, just one set or group of binary conditions be analysed, such as a binary superset including all the binary conditions and that will indicate whether or not to reject or accept the multimodal biometric data C according to the result of the machine learning algorithm.

Thus, although after the step of analysing the biometric characteristics B it will not be possible to determine which of the binary condition or conditions in the set of binary conditions has caused the multimodal biometric data to be rejected, it will be known that at least one of them will have caused the multimodal biometric data to be rejected, and although it will be possible to determine whether to reject or accept the multimodal biometric data C according to the result of the machine learning algorithm, it will then be necessary to determine which binary condition or conditions caused the rejection in order to notify the binary condition or conditions that have caused the rejection D.

In this way, it is possible to reduce the complexity of the step of analysing the biometric characteristics B, since its associated neural network will be simpler, causing its execution to be much faster. Therefore, if none of the binary conditions causes the fingerprint to be rejected, the acceptance of the fingerprint will be more agile.

Thus, as shown in Fig. 5, the step of analysing the biometric characteristics B, which in this case will analyse a single binary condition that will be a binary superset of binary conditions, as presented in the table in Fig. 2, will be performed with the same input of length n=923 as that indicated in the embodiment of Fig. 3 but with an output of length m=1 which will indicate whether or not the binary condition which is a superset of binary conditions has been fulfilled. This module will be a module comprising a neural network as previously shown in Fig 4, characterised by an input of length n=923 and an output of length m=1 which will indicate whether or not the condition which is a superset of binary conditions has been fulfilled and therefore whether the fingerprint must be accepted or rejected.

Only if the superset of binary conditions indicates that the fingerprint should be rejected, will the biometric characteristics have to be analysed independently based on the binary conditions with a module equivalent to that previously detailed in Fig. 3, as indicated in Fig. 5, to know the binary condition or conditions that must be notified together with the rejection of the fingerprint.

For example, in order to train the neural network of Fig. 3 with input of length n=923 and output of length m=1, the Adaboost algorithm can be appropriately adjusted to minimise the number of falsely rejected fingerprints, while maintaining a very low level of fingerprints falsely accepted.

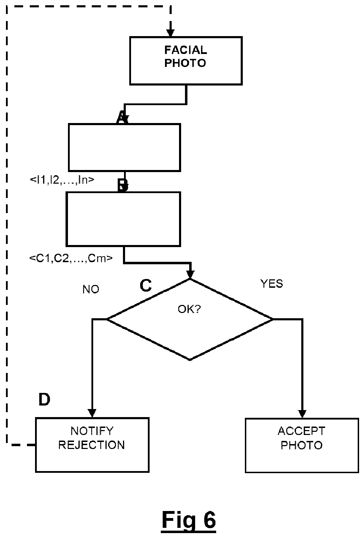

Fig. 6a shows another embodiment of the computer-implemented method for quality control of multimodal biometric data, especially suitable for analysing facial photographs. The method comprises extracting biometric characteristics A from multimodal biometric data, in this case a facial photograph, i.e. from the face of a user, analysing the biometric characteristics B by means of at least one machine learning algorithm based on at least one set of binary conditions and rejecting or accepting the multimodal biometric data C depending on the result of said machine learning algorithm and if the multimodal biometric data is rejected, notifying the binary condition or conditions from at least one set of binary conditions that have caused the rejection D.

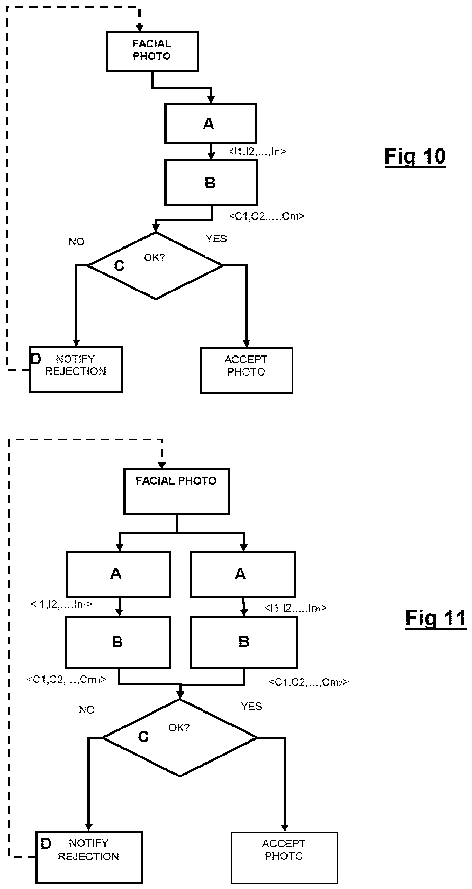

As detailed below, the embodiment described in Fig. 6 is based on geometric binary conditions of the facial photograph, while another embodiment which will be described below and which is depicted in Fig. 10 is based on binary appearance conditions. Both embodiments described in Figs. 6 and 10 can be combined in the same method to analyse a facial photograph, so that geometric binary conditions and binary appearance conditions can be analysed simultaneously, as shown in Fig. 11.

The embodiment variant described in Fig. 6 is based on geometric binary conditions of the facial photograph as shown in the table in Fig. 2. In order to evaluate these geometric binary conditions, the corresponding biometric characteristics A already anticipated in the table in Fig. 2 will be extracted. These biometric characteristics that will be extracted by computer vision algorithms will be:
- Position of the centre of each eye of a detected face, for example using the Viola & Jones algorithm
- Position of a further 27 points of the face corresponding to specific facial characteristics and which outline the main regions of interest of the face, namely: eyebrows, eyes, nose, mouth and position of the chin. The location of these points, as well as those corresponding to the centre of the eyes, can be seen in Figure 2a. The algorithm used can be the Supervised Descent Method, which makes a cascade regression of an initial geometry, iteratively adjusting it to the real geometry of the face. This process can be repeated several times for each image, using different initial estimates of the geometry. The final results are first analysed to rule out statistical anomalies, and an average of the rest of the results is made. Therefore, the facial geometry will be obtained by means of regression cascades.

Naturally, both the centre position of the eyes and the other 27 points of the face are envisaged to be the coordinates for determining a pixel in the image, a pixel number of the image, or others. Thus, when the position is determined by a pixel number, the biometric characteristics n will be a vector with the value n=29.

Based on these biometric characteristics n, the following binary conditions m will be analysed, which were previously specified in the table in Fig. 2:
- front face
- eyes open
- mouth closed
- looking at camera

To predict these binary conditions an algorithm could be used such as the set of machine learning algorithms N previously indicated in Fig. 4 appropriately trained and characterised by an input with a dimension of n=30 where each input will be for example the coordinates of the positions of the points of the face previously described, and m=4, the previously indicated binary conditions.

However, it has been observed that by means of a set of machine learning algorithms N like the one in Fig. 4, it was not possible to achieve sufficient reliability in the prediction because of the great variability of the multimodal biometric data when these are an image, such as a facial photograph. Therefore, to predict said binary conditions, a set of machine learning algorithms, such as neural networks, have been developed which, by analysing combinations of the binary conditions n to be detected, surprisingly reduce the margin of error in relation to the previously described prediction modules, making it possible for the different networks to learn both common and discriminative patterns between different combinations of the binary conditions to be predicted.

There follows a description of this module which will perform the function of analysing biometric characteristics B by means of the combinations of the binary conditions to be predicted.

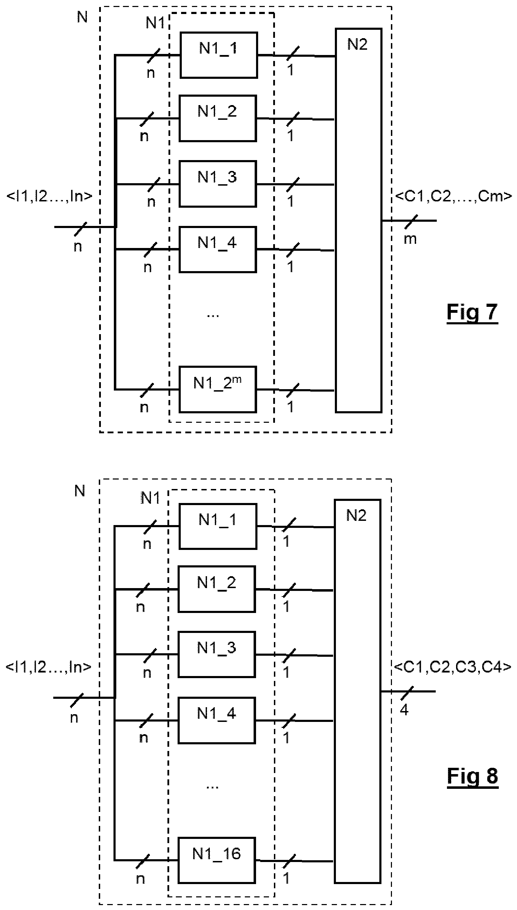

Fig. 7 shows a set of machine learning algorithms N that performs the function of analysing B biometric characteristics n by means of combinations of the binary conditions m to be predicted. As can be seen, the set of machine learning algorithms N comprises a first stage N1 of pre-trained machine learning algorithms N1_1, N1_2, N1_3, N1_2m, whose input consists of the biometric characteristics n previously extracted from the multimodal biometric data and whose output consists of all the combinations of the binary conditions m.

The set of machine learning algorithms N also comprises a second stage N2 of pre-trained machine learning algorithms, whose input is the result of the combinations of the binary conditions m of the first stage N1 and whose output are the predictions of the binary conditions M. Naturally, it is not necessary for the first stage N1 to contemplate all the combinations, although it has been observed that when all the combinations are contemplated, optimal results are obtained.

That is to say, the set of algorithms N may be formed by a first set of machine learning algorithms, such as artificial neural networks, which have been previously trained to predict a combination from among the multiple binary conditions to be predicted, i.e. for a set of m binary conditions there will be 2m modules of machine learning algorithms, such as neural networks, whose input will be the n biometric characteristics previously extracted from the multimodal biometric data and whose output will be a single binary value depending on whether the prediction indicates whether or not each of the combinations of binary conditions has been met.

Said combinations of binary conditions can be understood as the combinations between logical disjunctions between sets of binary conditions, preferably an inclusive disjunction or "OR" type relationship. It is also envisaged that the combinations of binary conditions may be performed by other types of combinations, for example, by logical conjunction, or "AND" type relationship.

The result of each of the 2m modules of machine learning algorithms will form the input of a new module of machine learning algorithms, such as a neural network whose output will be the previously indicated binary conditions and which were to be predicted. Naturally the output as discussed above may be appropriately coded and not necessarily have a dimension equal to the number of binary conditions to be predicted.

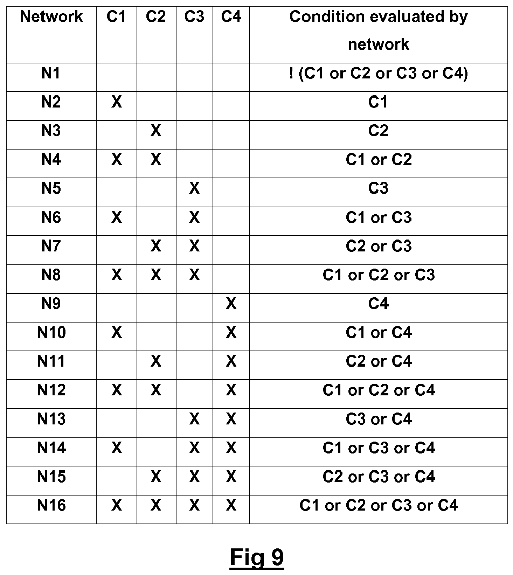

Fig. 8 details the module of Fig. 7 for a value of m=4, suitable for predicting the four binary conditions previously indicated. It is observed therefore that there will be 24=16 intermediate networks to predict the four binary conditions, the conditions of which are detailed for this embodiment in the table of Fig. 9. Of course, for other values of m, the number of trained intermediate networks should be varied accordingly. At the end, the 16 networks of the first stage N1 are joined in a single network of the second stage N2, adding a last output layer that predicts the 4 binary conditions. The final network can be retrained so that the intermediate networks can compensate between them for their errors, i.e., the intermediate networks learn useful outputs, slightly different from the inclusive disjunctions with which they were initially trained, thus increasing the robustness of the final network.

The embodiment variant described in Fig. 11 is based on binary appearance conditions m of the facial photograph as shown in the table in Fig. 2. In order to evaluate these binary appearance conditions m, the corresponding biometric characteristics n already anticipated in the table in Fig. 2 will be extracted A. These biometric appearance characteristics n that will be extracted by computer vision algorithms will be obtained by a similar transformation as for the facial image for each triangle defined by a facial geometry adapted to the face of the facial photograph. This facial geometry adapted to the face in the facial photograph can be obtained, as indicated above, by the means of the Supervised Descent Method algorithm, which makes a cascade regression of an initial geometry, iteratively adjusting it to the real geometry of the face. This process can be repeated several times for each image, using different initial estimates of the geometry. The final results are first analysed to rule out statistical anomalies, and an average of the rest of the results is made. This generates a front-facing view of the face. From the front-facing image, a HOG (Histogram of Oriented Gradients) type descriptor is taken for each cell of a grid superimposed over the same, which are concatenated in a characteristics vector. An analysis of principal components is applied to the vector to reduce its dimensionality. The resulting descriptor is the one that will be used to analyse binary appearance conditions, which will be, for example:
- hair along the eyes
- shadows along the face
- face obstructed
- face too dark or illuminated

To analyse B the biometric characteristics n a module similar to the one illustrated in Figs. 7 to 9 will also be used, since the analysis of combinations of the binary conditions to be detected surprisingly reduces the margin of error in relation to the previously described prediction modules, making it possible for the different networks to learn both common and discriminative patterns between different combinations of the binary conditions to be predicted.

Fig. 11 shows an embodiment variant in which both the method described for Fig. 6 and Fig. 10 is integrated, such that both geometric and appearance biometric characteristics n can be extracted A and analysed B simultaneously in parallel, such that the rejection of a facial photograph can be notified both on the basis of either geometric or appearance biometric characteristics n. Advantageously, this integration allows the capture of the facial geometry adapted to the face of the facial photograph to be performed only once, for example by the Supervised Descent Method algorithm, based on which both geometric and appearance biometric characteristics will be extracted, wherein the modules for analysing the geometric and appearance biometric characteristics n, are independent modules that will each notify the binary conditions m that involve the rejection of the facial photograph.

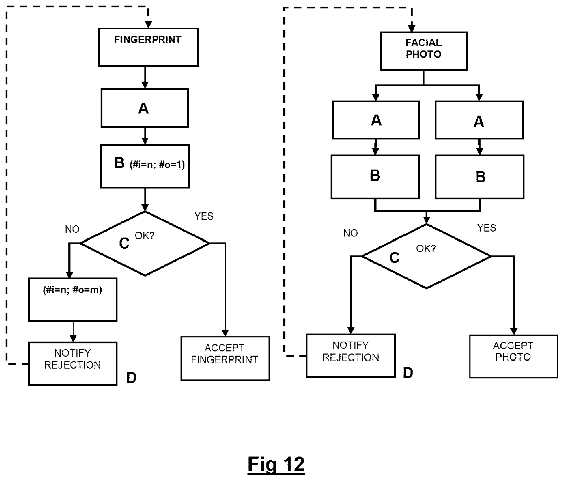

Fig. 12 presents an operating scheme of a station, such as a multibiometric enrolment station, which implements and uses for its operation the computer-implemented method for the automatic quality control of multimodal biometric data of the present invention. The enrolment station is provided with means, such as a computer, for implementing and performing the quality control of the multimodal biometric data as explained above.

The multibiometric enrolment station is provided with means for capturing a person's multimodal biometric data, such as fingerprints, by a fingerprint sensor, or as a facial photograph by a camera appropriately located in a suitably illuminated environment.

This enrolment station allows the validation of the user's fingerprints and a facial photograph allowing, for example, an enrolment process to continue, for example with the verification of the identity of the person based on the multimodal biometric data whose integrity has been verified on the basis of sets of binary conditions m applied to the biometric characteristics n extracted from each of the multimodal biometric data sets, such as a set of fingerprints, sequentially captured, and a facial photograph. This verification of the identity, based on identification means provided by the user, or even verifying the identity of the user without providing such identification means, can be performed for example by comparing the biometric characteristics n extracted from each of the multimodal biometric data with biometric characteristics previously stored in a corresponding database that are associated with an identity. In this way, the identification means provided by the user can be verified if it coincides with the identity associated with the biometric characteristics previously stored in a database that match or have a very high probability of matching the biometric characteristics n extracted from each of the multimodal biometric data items. It will also be possible to automatically determine the user's identity, if for example the latter has not provided identification means, as the identity associated with the biometric characteristics previously stored in a database that match or have a very high probability of matching the biometric characteristics n extracted from each of the multimodal biometric data items.

## Claims

1. A computer-implemented method for the automatic quality control of multimodal biometric data **characterised in that** it comprises:
- extracting (A) biometric characteristics (n) from multimodal biometric data;
- analysing (B) the biometric characteristics using a set of machine learning algorithms (N) previously trained to predict one or more binary conditions (m); and
- rejecting or accepting (C) the multimodal biometric data according to the results of said set of machine learning algorithms and
- if the multimodal biometric data is rejected, notifying (D) the binary condition or conditions that caused the rejection.

2. A method according to the preceding claim, **characterised in that** the set of machine learning algorithms (N) comprises artificial neural network algorithms

3. The method according to the preceding claim, **characterised in that** at least part of the artificial neural networks algorithms comprise at least one convolutional layer.

4. The method according to any one of the preceding claims, **characterised in that** the set of machine learning algorithms (N) comprises:
- a first stage (N1) of pre-trained machine learning algorithms (N1_1, N1_2, N1_3, N1_4, N1_16, N1_2^{m}), whose input consists of the biometric characteristics (n) previously extracted from the multimodal biometric data and whose output consists of combinations of the binary conditions (m); and
- a second stage (N2) of pre-trained machine learning algorithms whose input is the result of the combinations of the binary conditions of the first stage and whose output are the predictions of the binary conditions.

5. The method according to the preceding claim, **characterised in that** the first stage (N1) has 2^{m} machine learning algorithms (N1_1, N1_2, N1_3, N1_4, N1_16) whose output comprises all the combinations of the binary conditions (m).

6. The method according to any one of the preceding claims, **characterised in that** the multimodal biometric data is a facial photograph of a person and the step of extracting (A) the biometric characteristics comprises the extraction from the facial photograph of:
- centre position of the eyes
- facial geometry parameters of face

7. The method according to the preceding claim, **characterised in that** the set of binary conditions comprises a group of geometric binary conditions formed by:
• front face
• eyes open
• mouth closed
• looking at camera

8. The method according to any one of claims 6 to 7 **characterised in that** the set of binary conditions comprises a group of binary appearance conditions formed by:
• hair along the eyes
• shadows along the face
• face obstructed
• poorly lit face
comprising the step of extracting (A) the biometric characteristics (n), and correcting the facial geometry parameters to obtain a front-facing view of the face.

9. The method according to any one of claims 1 to 5, **characterised in that** the multimodal biometric data are one or more fingerprints of a person and the extraction stage (A) of the biometric characteristics (n) comprises extracting biometric characteristics from each of the fingerprints.

10. The method according to the preceding claim, **characterised in that** the biometric characteristics (n) of each of the fingerprints comprise:
• Finger number
• Fingerprint size
• Total number of minutiae
• Number of minutiae with quality > = 0.1
• Number of minutiae with quality > = 0.2
• Number of minutiae with quality > = 0.3
• Number of minutiae with quality > = 0.4
• Number of minutiae with quality > = 0.5
• Number of minutiae with quality > = 0.6
• Number of minutiae with quality > = 0.7
• Number of minutiae with quality > = 0.7
• Number of minutiae with quality > = 0.8
• Number of minutiae with quality > = 0.9
• NFIQ
• Mean intensities histogram
• Gradients histogram
• Entropies histogram
• Differential of intensities
• Hough transform lines magnitude histogram

11. The method according to the preceding claim, **characterised in that** the set of binary conditions (m) comprises the binary conditions:
• Fingerprint too dark
• Fingerprint too light
• Blurred fingerprint
• Speckled fingerprint
• Poorly positioned fingerprint
• Damaged fingerprint

12. A computer program adapted to carry out the method according to any one of the preceding claims.

13. A multibiometric enrolment station **characterised in that** it is provided with means for performing the multimodal biometric data quality control method according to any one of claims 1 to 11.

14. The station according to the preceding claim, **characterised in that** it is further provided with means for capturing multimodal biometric data of a person.

15. The station according to any one of claims 13 to 14, **characterised in that** it further comprises means for verifying the identity of the person based on the multimodal biometric data.
